# EUROPÄISCHE PATENTSCHRIFT

(11) **EP 3 160 796 B1**
(45) Veröffentlichungstag und Bekanntmachung des Hinweises auf die Patenterteilung: **27.03.2019**
(21) Anmeldenummer: 15730957.6
(22) Anmeldetag: 11.06.2015
(51) Int. Cl.: F21S 41/176

(54) **BELEUCHTUNGSEINRICHTUNG FÜR EIN KRAFTFAHRZEUG MIT EINER SICHERHEITSEINRICHTUNG ZUR DETEKTION VON FEHLZUSTÄNDEN UND VERFAHREN ZUR DETEKTION VON FEHLERZUSTÄNDEN**
LIGHTING DEVICE FOR A MOTOR VEHICLE, COMPRISING A SAFETY DEVICE FOR DETECTING FAULT STATES, AND METHOD FOR DETECTING FAULT STATES
DISPOSITIF D'ÉCLAIRAGE DESTINÉ À UN VÉHICULE AUTOMOBILE COMPRENANT UN DISPOSITIF DE SÉCURITÉ SERVANT À DÉTECTER DES DYSFONCTIONNEMENTS ET PROCÉDÉ SERVANT À DÉTECTER DES DYSFONCTIONNEMENTS

(30) Priorität: 27.06.2014 DE 102014009594
(43) Veröffentlichungstag der Anmeldung: 03.05.2017
(73) Patentinhaber: Audi AG, 85045 Ingolstadt (DE)
(72) Erfinder: HARTISCH, Michael, 08344 Grünhain-Beierfeld (DE)
(74) Vertreter: Thielmann, Frank
(86) Internationale Anmeldenummer: PCT/EP2015/001178
(87) Internationale Veröffentlichungsnummer: WO 2015/197163

(56) Entgegenhaltungen:
- WO-A1-2013/096984
- JP-A- 2013 168 586
- US-A1- 2011 063 115

## Beschreibung

Die Erfindung geht aus von einer Beleuchtungseinrichtung für ein Kraftfahrzeug, wobei die Beleuchtungseinrichtung eine Laserlichtquelle aufweist, die dazu ausgelegt ist, Licht zu emittieren und einen Reflektor mit einer Reflexionsseite, die dazu ausgelegt ist, Licht zu reflektieren, und mit einer Außenseite, die der Reflexionsseite abgewandt und gegenüberliegend angeordnet ist. Weiterhin weist die Beleuchtungseinrichtung eine Sicherheitseinrichtung zur Detektion von Fehlerzuständen der Beleuchtungseinrichtung auf, wobei die Sicherheitseinrichtung einen induktiven Sensor aufweist. Des Weiteren geht die Erfindung aus von einem Verfahren zur Detektion von Fehlerzuständen einer Beleuchtungseinrichtung für ein Kraftfahrzeug mittels einer Sicherheitsein richtung.

Aus dem Stand der Technik sind Scheinwerfer für Kraftfahrzeuge bekannt, die als Lichtquellen Laser, insbesondere Laserdioden, verwenden. Üblicherweise wird dabei das Licht der Laserlichtquelle auf ein Wellenlängenkonversionselement, wie z.B. einen Leuchtstoff, eingestrahlt, das das kohärente, monochromatische Laserlicht in weißes, und nicht mehr kohärentes Licht konvertiert. Das vom Leuchtstoff abgestrahlte Licht wird durch einen Reflektor reflektiert und über die Lichtaustrittsfläche des Scheinwerfers abgestrahlt. Die Verwendung von Laserlichtquellen in Scheinwerfern hat dabei den großen Vorteil, dass sich dadurch viel höhere Beleuchtungsstärken erzielen lassen und zudem sehr bauraumeffiziente Anordnungen möglich sind, da Laserlichtquellen, wie z.B. Leserdioden, sehr kompakt ausgestaltet und angeordnet werden können.

Problematisch bei der Verwendung von Laserlichtquellen ist allerdings, dass Laserlicht für das menschliche Auge sehr gefährlich sein kann. Daher muss sichergestellt sein, dass das Laserlicht nicht aus der Lichtaustrittfläche des Scheinwerfers austreten kann. Aus dem Stand der Technik sind daher Sicherheitsvorrichtungen bekannt, die Fehlfunktionen detektieren und im Fehlerfall die Laserlichtquelle abschalten.

Beispielsweise beschreibt die US 2011/0063115 A1 einen Scheinwerfer mit einer Laserlichtquelle und mit Photosensoren als Teil einer Sicherheitsvorrichtung. Das Laserlicht der rückseitig hinter dem Reflektor angeordneten Laserlichtquelle wird dabei durch eine Durchgangsöffnung im Reflektor in diesen eingekoppelt und auf einen Leuchtstoff eingestrahlt, der seinerseits wiederum Licht emittiert, das zum Teil auf den Reflektor eingestrahlt und von diesem reflektiert wird. Der Reflektor weist dabei eine weitere Durchgangsöffnung auf, an der rückseitig am Reflektor der Photosensor angeordnet ist. Liegt ein Defekt vor, kann der Photosensor dies durch eine Intensitätsänderung am Ort des Photosensors erfassen, woraufhin die Laserlichtquelle abgeschaltet werden kann.

Weiterhin ist eine Sicherheitsvorrichtung für Scheinwerfer mit Laserlichtquellen aus der WO 2013/096984 A1 bekannt. Diese Sicherheitsvorrichtung verwendet verschiedene Sensoren, um sicherheitskritische Zustände festzustellen, und bei Feststellung eines solchen Zustands die Laserlichtquellen abzuschalten. Zum einen sind dabei Sensoren im Scheinwerfer selbst vorgesehen, wie ein Lagesensor für die Positionierung der Laserlichtquelle, ein Phosphorsensor, der den Zustand des Phosphors bzw. des Leuchtstoffs überwacht, und auch ein Abdeckglassensor für die Scheinwerfereinheit. Zum anderen werden auch fahrzeugseitige Sensoren und Steuersignale genutzt, um z.B. einen Unfall des Fahrzeugs oder einen Aufprall zu detektieren, wie z.B. ein Beschleunigungssensor oder das Signal eines Airbag-Steuergeräts.

Die Umsetzung solcher Sicherheitseinrichtungen ist damit nur mit sehr hohem technischen Aufwand bewerkstelligbar. Zudem sind bei der Verwendung von Sensoren im Lichterzeugungsbereich, d.h. auf der reflektierenden Seite des Reflektors, Störeinflüsse auf die Beleuchtungsqualität nicht zu vermeiden, und bei der rückseitigen Anordnung am Reflektor sind dagegen Durchgangsöffnungen und Ausschnitte aus der Reflektorfläche erforderlich, was sich ebenfalls nachteilig auf die Lichteigenschaften des Scheinwerfers auswirkt, da dadurch die zur Reflexion nutzbare Fläche des Reflektors reduziert wird.

Die JP 2013 168586 A beschreibt eine Beleuchtungseinrichtung mit einem Reflektor und einer Laserlichtquelle, die Licht auf einen Leuchtstoff einstrahlt. Weiterhin weist die Beleuchtungseinrichtung eine einen induktiven Sensor umfassende Sicherheitseinrichtung zur Detektion von Fehlzuständen auf.

Aufgabe der vorliegenden Erfindung ist es daher, eine Beleuchtungseinrichtung mit einer Sicherheitseinrichtung zur Detektion von Fehlzuständen der Beleuchtungseinrichtung für ein Kraftfahrzeug und ein Verfahren zur Detektion von Fehlzuständen bereitzustellen, mittels welchen sich auf möglichst sichere, einfache und die Lichtauskopplung bzw. Beleuchtungseigenschaften möglichst wenig störende Weise eine Überwachung der Beleuchtungseinrichtung bewerkstelligen lässt.

Diese Aufgabe wird gelöst durch eine Beleuchtungseinrichtung und ein Verfahren gemäß den unabhängigen Ansprüchen. Vorteilhafte Ausgestaltungen der Erfindung finden sich in den abhängigen Ansprüchen.

Die erfindungsgemäße Beleuchtungseinrichtung für ein Kraftfahrzeug weist eine Laserlichtquelle auf, die dazu ausgelegt ist, Licht zu emittieren. Licht wird hier im Allgemeinen als elektromagnetische Strahlung verstanden, und bevorzugt als eine Strahlung in einem Wellenlängenbereich umfassend den sichtbaren Wellenlängenbereich, Infrarotbereich und UV-Bereich. Weiterhin weist die Beleuchtungseinrichtung einen Reflektor auf mit einer Reflexionsseite, die dazu ausgelegt ist, Licht zu reflektieren, und eine elektrisch leitfähige Schicht umfasst, und mit einer Außenseite, die der Reflexionsseite abgewandt und gegenüberliegend angeordnet ist. Weiterhin weist die Beleuchtungseinrichtung ein Wellenlängenkonversionselement auf, welches dazu ausgelegt ist, von der Laserlichtquelle auf das Wellenlängenkonversionselement eingestrahlte Licht in Licht anderer Wellenlängen zu konvertieren. Weiterhin weist die Beleuchtungseinrichtung eine Sicherheitseinrichtung zur Detektion von Fehlerzuständen der Beleuchtungseinrichtung auf. Dazu umfasst die Sicherheitseinrichtung mindestens einen induktiven Sensor, der in Bezug auf den Reflektor außenseitig angeordnet ist, so dass die Außenseite des Reflektors dem induktiven Sensor zugewandt ist und die Reflexionsseite des Reflektors dem induktiven Sensor abgewandt ist, wobei die Sicherheitseinrichtung dazu ausgelegt ist, mittels des induktiven Sensors eine Temperaturänderung zumindest eines Bereichs der Reflexionsseite des Reflektors zu erfassen.

Die Erfindung beruht dabei auf der Erkenntnis, dass sich durch lokale oder auch globale Temperaturänderungen der Reflexionsseite auf das Vorhandensein eines Fehlzustands schließen lässt. Darüber hinaus liegt der Erfindung weiterhin die Erkenntnis zugrunde, dass die normalerweise als störend empfundenen und Messungen verfälschenden Einflüsse von Temperaturänderungen auf induktive Sensoren auf besonders vorteilhafte Weise dazu genutzt werden können, um mittels induktiver Sensoren Temperaturänderungen zu erfassen. Die erfindungsgemäße Verwendung eines induktiven Sensors hat dabei den besonders großen Vorteil, dass eine Temperaturänderung auf extrem sichere, schnelle, genaue und nicht störende Weise erfasst werden kann. Dies könnte durch übliche Temperatursensoren nicht bewerkstelligt werden, da diese bei einer außenseitigen Anbringung am Reflektor Temperaturänderungen nur mit einer zeitlichen Verzögerung über die Außenseite und nicht direkt Temperaturänderungen der Reflexionsseite selbst erfassen könnten. Im Fehlerfall sind jedoch derartige zeitliche Verzögerungen inakzeptabel. Um eine möglichst schnelle Temperaturänderungsmessung der Reflexionsfläche des Reflektors mit Temperatursensoren zu ermöglichen, müssten diese an der Reflexionsfläche selbst oder zumindest in einem reflexionsflächenseitigen Bereich angeordnet sein, was jedoch wieder enorme Störeinflüsse auf die Beleuchtungseigenschaften mit sich bringt. Durch die Verwendung von induktiven Sensoren dagegen ist es möglich, eine Temperaturänderung der Reflexionsfläche selbst, direkt und ohne Zeitverzögerung zu erfassen, und gleichzeitig den induktiven Sensor außenseitig anzuordnen. Zudem sind durch die induktive Temperaturänderungserfassung auch keine Aussparungen, Durchgangsöffnungen oder Ausschnitte im Reflektor erforderlich, wodurch wiederum eine Minderung der Beleuchtungsqualität vermieden wird. Darüber hinaus können induktive Sensoren technisch sehr einfach und kostengünstig ausgestaltet werden und darüber hinaus beanspruchen sie nicht viel Bauraum. Durch die außenseitige Anordnung mindern sie die Beleuchtungsqualität der Beleuchtungseinrichtung nicht und auch die Reflektoren müssen nicht durch aufwendige Sonderanfertigungen mit Aussparungen versehen werden. Auch sind an die Ausgestaltung der Reflektoren keine besonderen Ansprüche zu stellen. Übliche Reflektoren können eine reflektierende metallische Beschichtungen aufweisen, die damit also auch elektrisch leitfähig ist. Damit ist also eine induktive Temperaturänderungserfassung der Reflexionsseite möglicht, ohne dafür den Reflektor noch extra präparieren zu müssen, da die für die induktive Temperaturänderungserfassung erforderliche elektrische Leitfähigkeit der Reflexionsseite bereits durch die reflektierende Beschichtung selbst bereitgestellt ist. Durch die Erfindung lässt sich damit auf besonders sichere, einfache und die Lichtauskopplung bzw. die Beleuchtungseigenschaften nicht beeinflussende Weise eine Überwachung der Beleuchtungseinrichtung bewerkstelligen.

Bei einer vorteilhaften Ausgestaltung der Erfindung umfasst der induktive Sensor eine Spule, wobei der Sensor dazu ausgelegt ist, mittels der Spule ein sich zeitlich, insbesondere periodisch, änderndes Magnetfeld zu erzeugen. Dies kann auf einfache Weise durch Anlegen einer Wechselspannung an die Spule erfolgen oder im Allgemeinen durch Beaufschlagen der Spule mit einem Strom mit einer sich zeitlich ändernden Stromstärke. Dadurch ist der induktive Sensor dazu ausgelegt, einen Induktionsstrom in der elektrisch leitfähigen Schicht der Reflexionsseite des Reflektors zu induzieren. Das durch die Spule erzeugte, sich zeitlich ändernde Magnetfeld induziert dabei insbesondere Wirbelströme in der elektrisch leitfähigen Schicht des Reflektors. Diese Wirbelströme erzeugen dabei selbst wiederum ein Magnetfeld, dass sich dem der Spule überlagert. Temperaturänderungen der elektrisch leitfähigen Schicht ändern dabei die Stromstärke der Wirbelströme und damit das von diesen erzeuge Magnetfeld, insbesondere in seiner Stärke. Durch die Wechselwirkung des durch die Wirbelströme erzeugten Magnetfelds mit dem Magnetfeld der Spule können durch den induktiven Sensor damit auf einfache Weise Temperaturänderungen der elektrisch leitfähigen Schicht direkt und schnell erfasst werden. Dazu kann beispielsweise der Widerstand im Magnetfeld der Spule gemessen werden und durch eine Widerstandsänderung die Temperaturänderung im Bereich der elektrisch leitfähigen Schicht erfasst werden.

Bei einer vorteilhaften Ausgestaltung der Erfindung ist die Laserlichtquelle derart angeordnet, dass diese im Betrieb Laserlicht in Richtung der Reflexionsseite des Reflektors derart abstrahlt, dass zumindest eine theoretische, geradlinige Verlängerung eines Lichtstrahls des Laserlichts auf die Reflexionsseite des Reflektors trifft, also beispielsweise so, dass der Schnittpunkt der Verlängerung des Laserstrahls mit der Reflexionsseite in Ausbreitungsrichtung des Laserstrahl vor einem theoretischen Schnittpunkt des Laserstrahls mit der Außenseite des Reflektors liegt. Insbesondere kann hier angenommen werden, dass die Laserlichtquelle das Laserlicht in Form eines einzigen Lichtstrahls abstrahlt. Weiterhin ist die theoretische, gradlinige Verlängerung des Lichtstrahls so zu verstehen, dass noch weitere Elemente vorgesehen werden können, wie z.B. ein Leuchtstoffelement, auf das das Laserlicht eingestrahlt wird, so dass der Laserlichtstrahl selbst nicht auf die Reflexionsseite des Reflektors trifft, jedoch die theoretische Verlängerung dieses Lichtstrahls, so als wäre z.B. das Leuchtstoffelement nicht vorhanden. Mit anderen Worten ist in Lichtabstrahlrichtung der Laserlichtquelle die Reflexionsseite des Reflektors der Laserlichtquelle näher gelegen als die Außenseite des Reflektors und das Laserlicht wird damit direkt in den Reflektor eingestrahlt. Dies hat zum einen den großen Vorteil, dass so keine Durchgangsöffnungen im Reflektor vorgesehen werden müssen, durch die das Laserlicht in den Reflektor eingekoppelt wird, was somit wiederum eine negative Auswirkung auf die Beleuchtungsqualität durch den Verlust zusätzlicher reflektierender Bereiche des Reflektors verhindert. Dabei kann die Laserlichtquelle reflexionsseitig in Bezug auf den Reflektor angeordnet sein, insbesondere ist im Fall eines ebenen Reflektors der Reflektor zwischen der Laserlichtquelle und dem mindestens eine induktiven Sensor angeordnet. Im Fall eines nicht ebenen Reflektors, insbesondere eines gekrümmten Reflektors, dessen umfängliche Begrenzung eine Begrenzung einer Lichtaustrittsöffnung des Reflektors definiert, durch die reflektiertes Licht austritt, kann die Laserlichtquelle in gleicher Weise angeordnet sein, d.h. der Reflektor ist zwischen der Laserlichtquelle und dem induktiven Sensor angeordnet, oder die die Laserlichtquelle kann auch so angeordnet sein, dass der Laserlichtstrahl durch die Lichtaustrittsöffnung des Reflektors in diesen eingekoppelt wird. Dies ermöglicht eine seitliche Einkopplung des Laserlichts in den Reflektor, so dass die Laserlichtquelle selbst nicht innerhalb des Reflektors angeordnet werden muss, was wiederum Störeinflüsse reduziert. Ein wesentlicher Vorteil bei diesen Ausgestaltungen ist, dass im Fehlerfall, wie beispielsweise eines Defekts am Leuchtstoff, eine Positionsveränderung des Leuchtstoffelements oder einer Sättigung des Leuchtstoffs, so dass eingestrahltes Laserlicht den Leuchtstoff unkonvertiert durchdringt, dass das Laserlicht im Fall einer derartigen Fehlfunktion direkt auf die Reflexionsseite des Reflektors einstrahlt, was zu einer Temperaturerhöhung, insbesondere in dem Bereich der Reflexionsseite, in den eingestrahlt wird, kommt und dann quasi instantan die Temperaturerhöhung durch den induktiven Sensor erfasst werden kann. Da es bei einer derartigen Anordnung der Laserlichtquelle in den meisten Fehlerfällen also dazu kommt, dass Laserlicht direkt auf die Reflexionsseite eingestrahlt wird, ist eine daraus resultierende sehr schnelle und starke Temperaturerhöhung besonders zuverlässig zu erfassen. Zu dem ist bei einer solchen Anordnung der Laserlichtquelle auch das Risiko nicht gegeben, dass bei einem auftretenden Defekt das Laserlicht direkt über die Lichtaustrittsfläche des Reflektors nach außen gestrahlt wird.

Bei einer weiteren besonders vorteilhaften Ausgestaltung der Erfindung ist der induktive Sensor, insbesondere die Spule des induktiven Sensors, mechanisch kontaktierend and der Außenseite des Reflektors angeordnet. Dadurch ist eine optimale Funktionsweise des induktiven Sensors gegeben, da so der Abstand des induktiven Sensors zur Reflexionsseite minimiert wird. Gleichzeitig kann der Erfassungsbereich des Sensors damit maximiert werden. Zudem ist durch diese Ausgestaltung eine besonders bauraumeffiziente Anordnung gegeben. Um die Funktionsweise weiterhin zu optimieren, ist es vorgesehen, dass die Spulenachse entlang der Reflexionsseite, d.h. in tangentialer Richtung zur Reflexionsseite, ausgerichtet ist.

Bei einer weiteren vorteilhaften Ausgestaltung der Erfindung ist der Reflektor aus einem elektrisch nicht leitfähigen Material, z.B. Kunststoff, gebildet, das zumindest mit der elektrisch leitfähigen Schicht beschichtet ist, so dass die Außenseite des Reflektors aus dem elektrisch nicht leitfähigen Material gebildet ist. Diese Ausgestaltung ermöglicht zum einen eine besonders kostengünstige Ausbildung des Reflektors. Zum anderen liegt der besonders große Vorteil dieser Ausgestaltung jedoch vor allem darin, dass durch den induktiven Sensor ausschließlich Temperaturänderungen an der Reflexionsseite des Reflektors erfasst werden, da der übrige und die Außenseite umfassende Teil des Reflektors, der aus dem elektrisch nicht leitendem Material besteht, nicht mit dem sich ändernden Magnetfeld der Spule wechselwirkt. Dadurch können Temperaturänderungen der Reflexionsseite des Reflektors deutlich präziser erfasst werden.

Bei einer weiteren vorteilhaften Ausgestaltung der Erfindung ist die Sicherheitseinrichtung dazu ausgelegt, die Lichtquelle abzuschalten, falls eine mittels des induktiven Sensors detektierte Temperatur und/oder Temperaturänderung des Bereichs der Reflexionsseite des Reflektors einen ersten vorbestimmten Grenzwert überschreitet und/oder einen zweiten vorbestimmten Grenzwert unterschreitet. Ein Fehlerzustand, wie oben beschreiben, äußert sich darin, dass Laserlicht direkt auf die Reflexionsseite des Reflektors einstrahlt, was zu einer starken Temperaturerhöhung in diesem Berech der Reflexionsseite führt. Das Abschalten der Laserlichtquelle bei Detektion dieser Temperaturerhöhung ist daher besonders vorteilhaft. Weiterhin kann es aber auch vorgesehen sein, dass die Laserlichtquelle auch abgeschaltet wird, wenn eine Temperaturänderung einen Grenzwert unterschreitet. Damit können beispielsweise zusätzlich Fälle berücksichtigt werden, in denen aufgrund eines Defekts die Reflexionsseite zumindest bereichsweise nicht mehr mit der Lichtintensität bestrahlt wird, die zu einem funktionsfähigen, fehlerfreien Normalzustand korrespondiert, sondern mit einer geringeren. Solche Fehlerzustände, wie wenn sich beispielsweise der Leuchtstoff in seiner Position geändert hat, ohne dass Laserlicht direkt auf den Reflektor trifft, oder sich die Konversionseffizienz des Leuchtstoffs durch zu starke Erwärmung und/oder nahe des Sättigungsbereichs verringert, oder wenn sich die Laserlichtquelle in ihrer Position geändert hat, so dass weder der Leuchtstoff noch der Reflektor durch Laserlicht bestrahlt wird, können sich dann auch in einer Temperaturerniedrigung in zumindest einem Bereich der Reflexionsseite äußern, wobei diese Temperaturerniedrigung ebenfalls durch den induktiven Sensor erfasst und die Laserlichtquelle bei Unterschreiten des zweiten Grenzwerts abgeschaltet werden kann. Damit wird auf besonders einfache Weise eine zuverlässige Detektion einer Vielzahl an Fehlern und Funktionsstörungen auf besonders schnelle Weise bereitgestellt.

Bei einer weiteren vorteilhaften Ausgestaltung der Erfindung weist die Sicherheitseinrichtung eine Mehrzahl an induktiven Sensoren auf. Dabei ist jedem induktiven Sensor ein vorbestimmter Erfassungsbereich zugeordnet und die Anzahl und Anordnung der induktiven Sensoren an der Außenseite des Reflektors ist bevorzugt derart, dass zumindest der Großteil und bevorzugt die gesamte Reflexionsseite des Reflektors durch die Erfassungsbereiche der induktiven Sensoren abgedeckt ist. Damit kann sichergestellt werden, dass Temperaturänderungen in jedem Bereich der Reflexionsseite des Reflektors, selbst wenn diese nur lokal auftreten, besonders schnell und zuverlässig erfasst werden können.

Mehrere induktive Sensoren haben dabei noch einen weiteren Vorteil, denn das Vorsehen mehrerer induktiver Sensoren ermöglicht die Ausgestaltung der Erfindung derart, dass die Sicherheitseinrichtung dazu ausgelegt ist, im Fall einer lokalen Temperaturerhöhung in einem Teilbereich des Reflexionsseite des Reflektors den Ort dieses Teilbereichs geometrisch zu bestimmen. Beispielsweise können dafür mindestens zwei oder drei induktive Sensoren vorgesehen werden. Eine nichtlineare Anordnung von drei induktiven Sensoren, d.h. die induktiven Sensoren sind so angeordnet, dass sie ein nicht entartetes Dreieck bilden, ist dabei besonders vorteilhaft, da sich so der geometrische Ort der Temperaturänderung besonders genau bestimmen lässt. Die Bestimmung des geometrischen Orts kann dabei z.B. einer anschließenden Fehleranalyse dienen. Damit lassen sich mögliche Defekte besonders schnell lokalisieren und beheben.

Das erfindungsgemäße Verfahren dient zur Detektion von Fehlfunktionen einer Beleuchtungseinrichtung für ein Kraftfahrzeug mittels einer Sicherheitseinrichtung. Dabei weist die Beleuchtungseinrichtung eine Laserlichtquelle auf, die dazu ausgelegt ist Licht zu emittieren und auf ein Wellenlängenkonversionselement einzustrahlen, welches das eingestrahlte Licht in Licht anderer Wellenlängen konvertiert, und einen Reflektor mit einer Reflexionsseite, die dazu ausgelegt ist, Licht zu reflektieren, und eine elektrisch leitfähige Schicht umfasst, und mit einer Außenseite, die der Reflexionsseite abgewandt und gegenüberliegend angeordnet ist. Beim erfindungsgemäßen Verfahren wird eine Temperaturänderung zumindest eines Bereichs der Reflexionsseite des Reflektors durch mindestens einen induktiven Sensor der Sicherheitseinrichtung, der in Bezug auf den Reflektor außenseitig angeordnet ist, so dass die Außenseite des Reflektors dem induktiven Sensor zugewandt ist und die Reflexionsseite des Reflektors dem induktiven Sensor abgewandt ist, erfasst und ein Fehlzustand in Abhängigkeit von der Temperaturänderung erfasst.

Die für die erfindungsgemäße Beleuchtungseinrichtung und ihre Ausgestaltungen genannten Merkmale, Merkmalskombinationen und deren Vorteile gelten in gleicher Weise für das erfindungsgemäße Verfahren. Darüber hinaus ermöglichen die im Zusammenhang mit der erfindungsgemäßen Beleuchtungseinrichtung und deren Ausgestaltungen genannten gegenständlichen Merkmale die Weiterbildung des erfindungsgemäßen Verfahrens durch weitere Verfahrensschritte.

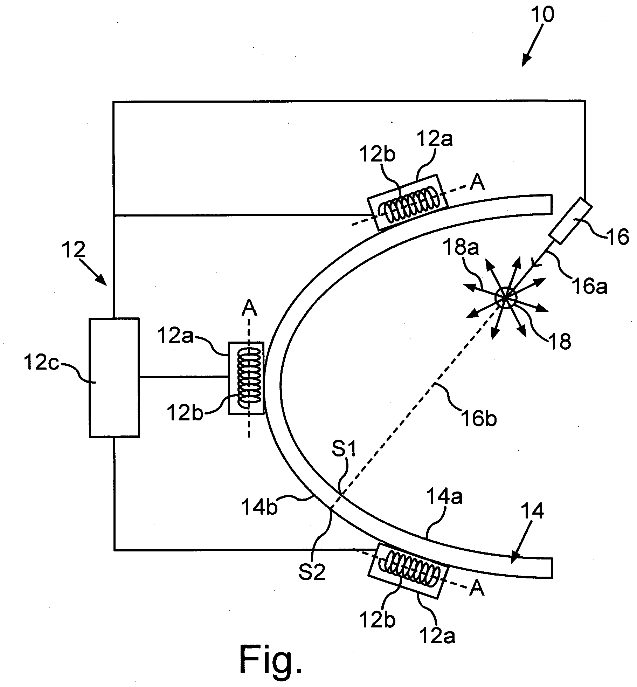

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Dabei zeigt die einzige Figur eine schematische Darstellung einer Beleuchtungseinrichtung 10 für ein Kraftfahrzeug mit einer Sicherheitseinrichtung 12 gemäß einem Ausführungsbeispiel der Erfindung. Die Beleuchtungseinrichtung 10, wie z.B. ein Scheinwerfer des Kraftfahrzeugs, weist hierbei exemplarisch einen gekrümmten Reflektor 14 auf. Die Geometrie des Reflektors 14 kann je nach Anwendungsfall und bereitzustellender Beleuchtungsstärkeverteilung beliebig ausgestaltet sein, wie z.B. auch asymmetrisch und/oder facettiert. Weiterhin weist die Beleuchtungsseinrichtung 10 eine Laserlichtquelle 16 und ein Wellenlängenkonversionselement 18, insbesondere ein Leuchtstoffelement, auf. Die Laserlichtquelle 16, wie z.B. eine Laserdiode, ist so ausgerichtet, dass der von der Laserlichtquelle 16 abgestrahlte Lichtstrahl 16a auf das Wellenlängenkonversionselement trifft. Das Wellenlängenkonversionselement konvertiert das einstrahlte, im Wesentlichen monochromatische und kohärente Laserlicht 16a in Licht 18a anderer Wellenlängen, insbesondere in Licht 18a mehrerer unterschiedlicher Wellenlängen, so dass bevorzugt im Wesenlichten weißes Licht 18a vom Wellenlängenkonversionselement 18 abgestrahlt wird.

Darüber hinaus kann die Beleuchtungseinrichtung 10 bei Bedarf noch weitere Elemente, insbesondere optische Elemente, wie Linsen, Spiegel, usw. aufweisen. Das vom Wellenlängenkonversionselement 18 abgegebene Licht 18a wird dann zumindest zum Teil vom Reflektor 14 reflektiert und über die Lichtaustrittsfläche der Beleuchtungseinrichtung 10 abgestrahlt.

Der Reflektor 14 weist dazu eine Reflexionsseite 14a und eine der Reflexionsseite 14a gegenüberliegende, der Reflexionsseite 14a abgewandte Außenseite 14b auf. Das Wellenlängenkonversionselement 18 ist dabei so in Bezug auf den Reflektor 14 angeordnet, dass die Reflexionsseite 14a des Reflektors 14 dem Wellenlängenkonversionselement 18 zugewandt ist und die Außenseite des Reflektors 14b dem Wellenlängenkonversionselement 18 abgewandt ist. Das Wellenlängenkonversionselement 18 kann dabei, wie dargestellt, auch seitlich versetzt in Bezug auf den Reflektor 14 bzw. nicht auf einer Symmetrieachse des Reflektors 14, angeordnet sein. Damit kann erreicht werden, dass reflektiertes Licht nicht wieder oder zu einem geringeren Anteil auf das Wellenlängenkonversionselement 18 selbst trifft, und sich damit das Wellenlängenkonversionselement 18 selbst sich nicht störend auf die Beleuchtungsstärkeverteilung auswirkt.

Weiterhin ist die Laserlichtquelle 16 derart angeordnet, dass diese im Betrieb Laserlicht 16a in Richtung der Reflexionsseite 14a des Reflektors 14 derart abstrahlt, dass zumindest eine theoretische, geradlinige Verlängerung 16b des Lichtstrahls des Laserlichts 16a auf die Reflexionsseite 14a des Reflektors 14 trifft, also beispielsweise so, dass der Schnittpunkt S1 der Verlängerung 16b des Laserstrahls 16a mit der Reflexionsseite 14a in Ausbreitungsrichtung des Laserstrahl 16a vor einem theoretischen Schnittpunkt S2 der Verlängerung 16b des Laserstrahls 16a mit der Außenseite 14b des Reflektors 14 liegt. Damit strahlt also die Laserlichtquelle 16 direkt in den Reflektor 14 ein, ohne dass Aussparungen in der Reflektorfläche vorgesehen werden müssen.

Die Reflexionsseite 14a des Reflektors 14 weist weiterhin eine elektrisch leitfähige und reflektierende, insbesondere metallische, Beschichtung auf bzw. ist aus einer solchen gebildet. Der übrige Reflektor 14 ist bevorzugt aus einem elektrisch nicht leitfähigen Material, wie z.B. aus einem Kunststoff, gebildet.

Um sicherzustellen, dass im Fall eines Defekts oder einer Fehlfunktion kein unkonvertiertes Laserlicht 16a durch die Lichtaustrittsfläche nach außen dringen kann, ist eine Sicherheitseinrichtung 12 vorgesehen, die mindestens einen induktiven Sensor 12a umfasst. Exemplarisch sind hier drei induktive Sensoren 12a dargestellt. Die geometrische Anordnung der induktiven Sensoren 12a ist dabei abhängig von der Reflektorgeometrie. Die induktiven Sensoren 12a weisen einen vorbestimmten Erfassungsbereich auf. Daher ist die Anzahl und Anordnung der induktiven Sensoren 12a bevorzugt dergestalt, dass die Erfassungsbereiche den Großteil und bevorzugt die gesamte Reflexionsseite 14a überdecken, so dass Temperaturänderungen in jedem Bereich der Reflexionsseite 14a erfasst werden können. Diese induktiven Sensoren 12a umfassen dabei jeweils eine Spule 12b, deren Spulenachsen A bevorzugt in tangentialer Richtung zur Außenseite 14b bzw. Reflexionsseite 14a des Reflektors 14 ausgerichtet sind. Weiterhin sind diese Spulen 12b möglichst nahe an der Außenseite 14b angeordnet und bevorzugt kontaktierend an der Außenseite 14b des Reflektors 14. Dadurch lässt sich der Erfassungsbereich der induktiven Sensoren 12a möglichst groß halten, die Sensibilität und Genauigkeit optimieren und auch eine Halterung für die induktiven Sensoren 12b in einer besonders kompakten Anordnung bereitstellen.

Diese Spulen 12b werden mit einem Strom beaufschlagt, der in seiner Stromstärke zeitlich variiert, z.B. mit einem Wechselstrom. Dadurch wird ein Magnetfeld hervorgerufen, dessen magnetische Feldstärke bzw. magnetische Flussdichte ebenfalls betragsmäßig zeitlich variiert. Dadurch wiederum werden Wirbelströme in der elektrisch leitfähigen Schicht der Reflexionsseite 14a des Reflektors 14 induziert, die ihrerseits wiederum ein Magnetfeld erzeugen. Da Temperaturänderungen der Reflexionsseite 14a eine Änderung des durch die Wirbelströme erzeugten Magnetfelds bewirken, können die Temperaturänderungen über die Wechselwirkung dieses Magnetfelds mit dem Spulenmagnetfeld erfasst werden. Die thermische Veränderung der metallischen Reflektoroberfläche, d.h. der Reflexionsseite 14a, kann z.B. über die Veränderung des Widerstands im magnetischen Feld der Spulen 12b gemessen werden. Die induktiven Sensoren 12a können weiterhin mit einer Steuer- bzw. Auswerteinrichtung 12c gekoppelt sein, die die Sensorsignale auswertet und gemäß einer Auswertelogik zwischen einem fehlerfreien Funktionszustand und einem Fehlerzustand unterscheidet. Bei erfasster Detektion eines Fehlerzustands kann die Steuer- bzw. Auswerteinrichtung 12c die Laserlichtquelle 16 abschalten. Gegebenenfalls kann die Steuer- bzw. Auswerteinrichtung 12c auch mittels der Sensorsignale den geometrischen Ort einer Temperaturerhöhung bestimmen und beispielsweise zu späteren Fehleranalysezwecken speichern. Dazu ist eine Anordnung von mindestens drei Spulen 12b an der Außenseite 14b des Reflektors 14 besonders geeignet.

Vorteilhafterweise ist damit eine direkte und verzögerungsfreie Temperaturänderungserfassung der Reflexionsseite 14a möglich, ohne dass die induktiven Sensoren 12a selbst an der Reflexionsseite 14a vorgesehen werden müssen. Überschreitet eine erfasste Temperaturänderung in einem Bereich der Reflexionsseite 14a beispielsweise einen vorbestimmten Wert, so kann die Sicherheitseinrichtung 12 die Laserlichtquelle 16 abschalten.

Vorteilhafterweise können so Fehlzustände und Fehlfunktionen eines hochenergetischen Lichtsystems, wie einem laserbasierten Scheinwerfer, durch Temperaturveränderung an der optischen Fläche, d.h. der Reflexionsseite 14a, schnell und zuverlässig erkannt werden. Durch die induktiven Sensoren 12a auf der Rückseite der optisch relevanten Fläche, d.h. der Außenseite 14b des Reflektors 14, kann die umgesetzte Strahlungsenergie in Summe und Position bestimmt werden, insbesondere durch die Veränderung des magnetischen Feldes, hervorgerufen durch die örtliche Temperaturänderung in einem Fehlerfall. Dadurch, dass die Laserlichtquelle 16 direkt in den Reflektor 14 einstrahlt, kann zusätzlich das Risiko minimiert werden, dass in einem Fehlerfall das Laserlicht 16a direkt, d.h. ohne vom Reflektor 14 reflektiert zu werden, aus der Beleuchtungseinrichtung 10 austritt. Insgesamt kann so vorteilhafterweise die Lichtaustrittsfläche, die die Umgebung beleuchtet, direkt überwacht werden, eine im Fehlerfall kritische Strahlung abgeschaltet werden und weiterhin durch die Verwendung der induktiven Sensoren 12a außerhalb der Lichterzeugung Störeinflüsse minimiert werden.

## Patentansprüche

1. Beleuchtungseinrichtung (10) für ein Kraftfahrzeug, die Beleuchtungseinrichtung (10) aufweisend
- eine Laserlichtquelle (16), die dazu ausgelegt ist, Licht (16a) zu emittieren;
- einen Reflektor (14) mit einer Reflexionsseite (14a), die dazu ausgelegt ist, Licht zu reflektieren, und eine elektrisch leitfähige Schicht umfasst, und mit einer Außenseite (14b), die der Reflexionsseite (14a) abgewandt und gegenüberliegend angeordnet ist; und
- eine Sicherheitseinrichtung (12) zur Detektion von Fehlerzuständen der Beleuchtungseinrichtung (10), wobei Sicherheitseinrichtung (12) mindestens einen induktiven Sensor (12a) aufweist;
- ein Wellenlängenkonversionselement (18), welches dazu ausgelegt ist, von der Laserlichtquelle (16) auf das Wellenlängenkonversionselement (18) eingestrahlte Licht (16a) in Licht (18a) anderer Wellenlängen zu konvertieren;
**dadurch gekennzeichnet, dass**
die Reflexionsseite (14a) eine elektrisch leitfähige Schicht umfasst, und der induktive Sensor (12a) in Bezug auf den Reflektor (14) außenseitig angeordnet ist, so dass die Außenseite (14b) des Reflektors (14) dem induktiven Sensor (12a) zugewandt ist und die Reflexionsseite (14a) des Reflektors (14) dem induktiven Sensor (12a) abgewandt ist, und wobei die Sicherheitseinrichtung (12) dazu ausgelegt ist, mittels des induktiven Sensors (12a) eine Temperaturänderung zumindest eines Bereichs der Reflexionsseite (14a) des Reflektors (14) zu erfassen.

2. Beleuchtungseinrichtung (10) nach Anspruch 1,
**dadurch gekennzeichnet, dass**
die Laserlichtquelle (16) derart angeordnet ist, dass diese im Betrieb Laserlicht (16a) in Richtung der Reflexionsseite (14a) des Reflektors (14) derart abstrahlt, dass zumindest eine theoretische, geradlinige Verlängerung (16b) eines Lichtstrahls des Laserlichts (16a) auf die Reflexionsseite (14a) des Reflektors (14) trifft.

3. Beleuchtungseinrichtung (10) nach einem der vorhergehenden Ansprüche,
**dadurch gekennzeichnet, dass**
der Reflektor (14) aus einem elektrisch nicht leitfähigen Material ausgebildet ist, das zumindest mit der elektrisch leitfähigen Schicht beschichtet ist, so dass die Außenseite (14b) des Reflektors (14) aus dem elektrisch nicht leitfähigen Material gebildet ist.

4. Beleuchtungseinrichtung (10) nach einem der vorhergehenden Ansprüche,
**dadurch gekennzeichnet, dass**
der induktive Sensor (12a) eine Spule (12b) umfasst, und der induktive Sensor (12a) dazu ausgelegt ist, mittels der Spule (12b) ein sich zeitlich änderndes Magnetfeld zu erzeugen.

5. Beleuchtungseinrichtung (10) nach einem der vorhergehenden Ansprüche,
**dadurch gekennzeichnet, dass**
der induktive Sensor (12a) dazu ausgelegt ist, einen Induktionsstrom in der elektrisch leitfähigen Schicht der Reflexionsseite (14a) des Reflektors (14) zu induzieren.

6. Beleuchtungseinrichtung (10) nach einem der vorhergehenden Ansprüche,
**dadurch gekennzeichnet, dass**
die Sicherheitseinrichtung (12) dazu ausgelegt ist, die Laserlichtquelle (16) abzuschalten, falls eine mittels des induktiven Sensors (14a) detektierte Temperatur und/oder Temperaturänderung des Bereichs der Reflexionsseite (14a) des Reflektors (14) einen ersten vorbestimmten Grenzwert überschreitet und/oder einen zweiten vorbestimmten Grenzwert unterschreitet.

7. Beleuchtungseinrichtung (10) nach einem der vorhergehenden Ansprüche,
**dadurch gekennzeichnet, dass**
der induktive Sensor (12a), insbesondere die Spule (12b) des induktiven Sensors (12a), mechanisch kontaktierend and der Außenseite (14b) des Reflektors (14) angeordnet ist.

8. Beleuchtungseinrichtung (10) nach einem der vorhergehenden Ansprüche,
**dadurch gekennzeichnet, dass**
die Sicherheitseinrichtung (12) eine Mehrzahl an induktiven Sensoren (12a) aufweist.

9. Beleuchtungseinrichtung (10) nach Anspruch 8,
**dadurch gekennzeichnet, dass**
die Sicherheitseinrichtung (12) dazu ausgelegt ist, im Fall einer lokalen Temperaturerhöhung in einem Teilbereich des Reflexionsseite (14a) des Reflektors (14) den Ort des Teilbereichs geometrisch zu bestimmen.

10. Verfahren zur Detektion von Fehlerzuständen einer Beleuchtungseinrichtung (10) für ein Kraftfahrzeug mittels einer Sicherheitseinrichtung (12), wobei die Beleuchtungseinrichtung (10) eine Laserlichtquelle (16) aufweist, die dazu ausgelegt ist, Licht (16a) zu emittieren und auf ein Wellenlängenkonversionselement einzustrahlen, welches das eingestrahlte Licht in Licht anderer Wellenlängen konvertiert, und einen Reflektor (14) mit einer Reflexionsseite (14a), die dazu ausgelegt ist, Licht zu reflektieren, und mit einer Außenseite (14b), die der Reflexionsseite (14a) abgewandt und gegenüberliegend angeordnet ist,
**dadurch gekennzeichnet, dass**
die Reflexionsseite (14a) eine elektrisch leitfähige Schicht umfasst, und eine Temperaturänderung zumindest eines Bereichs der Reflexionsseite (14a) des Reflektors (14) durch mindestens einen induktiven Sensor (12a) der Sicherheitseinrichtung (12), der in Bezug auf den Reflektor (14) außenseitig angeordnet ist, so dass die Außenseite (14b) des Reflektors (14) dem induktiven Sensor (12a) zugewandt ist und die Reflexionsseite (14a) des Reflektors dem induktiven Sensor (12a) abgewandt ist, erfasst wird, und ein Fehlzustand in Abhängigkeit von der Temperaturänderung erfasst wird.

## Claims

1. Lighting device (10) for a motor vehicle, the lighting device (10) comprising
- a laser light source (16), which is designed to emit light (16a);
- a reflector (14) with a reflective side (14a), which is designed to reflect light, and comprises an electrically conductive layer, and with an outer side (14b), which faces away from the reflective side (14a) and is arranged opposite the reflective side; and
- a safety device (12) for detecting fault states of the lighting device (10), wherein the safety device (12) has at least one inductive sensor (12a);
- a wavelength conversion element (18), which is designed to convert light (16a) irradiated from the laser light source (16) onto the wavelength conversion element (18) into light (18a) of other wavelengths;
**characterised in that**
the reflective side (14a) comprises an electrically conductive layer, and the inductive sensor (12a) is arranged on the outside in relation to the reflector (14), so that the outer side (14b) of the reflector (14) faces the inductive sensor (12a) and the reflective side (14a) of the reflector (14) faces away from the inductive sensor (12a), and wherein the safety device (12) is designed to detect a temperature change at least of a region of the reflective side (14a) of the reflector (14) by means of the inductive sensor (12a).

2. Lighting device (10) according to claim 1,
**characterised in that**
the laser light source (16) is arranged in such a manner that said laser light source radiates in operation laser light (16a) in the direction of the reflective side (14a) of the reflector (14) in such a manner that at least a theoretical straight extension (16b) of a light beam of the laser light (16a) strikes the reflective side (14a) of the reflector (14).

3. Lighting device (10) according to any one of the preceding claims,
**characterised in that**
the reflector (14) is formed from an electrically non-conductive material, which is coated at least with the electrically conductive layer, so that the outer side (14b) of the reflector (14) is formed from the electrically non-conductive material.

4. Lighting device (10) according to any one of the preceding claims,
**characterised in that**
the inductive sensor (12a) comprises a coil (12b), and the inductive sensor (12a) is designed to generate a time-varying magnetic field by means of the coil (12b).

5. Lighting device (10) according to any one of the preceding claims,
**characterised in that**
the inductive sensor (12a) is designed to induce an induction current in the electrically conductive layer of the reflective side (14a) of the reflector (14).

6. Lighting device (10) according to any one of the preceding claims,
**characterised in that**
the safety device (12) is designed to switch off the laser light source (16), if a temperature detected by means of the inductive sensor (14a) and/or temperature change of the region of the reflective side (14a) of the reflector (14) exceeds a first predetermined limit value and/or falls below a second predetermined limit value.

7. Lighting device (10) according to any one of the preceding claims,
**characterised in that**
the inductive sensor (12a), in particular the coil (12b) of the inductive sensor (12a), is arranged mechanically contacting the outer side (14b) of the reflector (14).

8. Lighting device (10) according to any one of the preceding claims,
**characterised in that**
the safety device (12) has a plurality of inductive sensors (12a).

9. Lighting device (10) according to claim 8,
**characterised in that**
the safety device (12) is designed in the case of a local temperature increase in a sub-region of the reflective side (14a) of the reflector (14) to geometrically determine the location of the sub-region.

10. Method for detecting fault states of a lighting device (10) for a motor vehicle by means of a safety device (12), wherein the lighting device (10) has a laser light source (16), which is designed to emit light (16a) and to irradiate a wavelength conversion element, which converts the irradiated light into light of other wavelengths, and a reflector (14) with a reflective side (14a), which is designed to reflect light, and with an outer side (14b), which is arranged facing away from and opposite to the reflective side (14a), **characterised in that**
the reflective side (14a) comprises an electrically conductive layer, and a temperature change at least of one region of the reflective side (14a) of the reflector (14) is detected by at least one inductive sensor (12a) of the safety device (12), which is arranged on the outside in relation to the reflector (14), so that the outer side (14b) of the reflector (14) faces the inductive sensor (12a), and the reflective side (14a) of the reflector faces away from the inductive sensor (12a), and a fault state dependent on the temperature change is detected.

## Revendications

1. Dispositif d'éclairage (10) destiné à un véhicule automobile, le dispositif d'éclairage (10) présentant
- une source de lumière laser (16) conçue pour émettre de la lumière (16a) ;
- un réflecteur (14) muni d'une face réfléchissante (14a), conçue pour réfléchir la lumière et qui comporte une couche électriquement conductrice, et muni d'une face extérieure (14b) qui est agencée détournée et opposée par rapport à la face réfléchissante (14a) ; et
- un dispositif de sécurité (12) destiné à la détection d'états de défaillance du dispositif d'éclairage (10), le dispositif de sécurité (12) présentant au moins un capteur inductif (12a) ;
- un élément de conversion de longueurs d'onde (18) conçu pour convertir la lumière (16a) rayonnée par la source de lumière laser (16) sur l'élément de conversion de longueurs d'onde (18) en lumière (18a) présentant d'autres longueurs d'onde ;
**caractérisé en ce que** la face réfléchissante (14a) comprend une couche électriquement conductrice, et le capteur inductif (12a) est agencé à l'extérieur par rapport au réflecteur (14) de sorte que la face extérieure (14b) du réflecteur (14) est tournée vers le capteur inductif (12a) et la face réfléchissante (14a) du réflecteur (14) est détournée du capteur inductif (12a), et dans lequel le dispositif de sécurité (12) est conçu pour détecter une modification de température d'au moins un secteur de la face réfléchissante (14a) du réflecteur (14) au moyen du capteur inductif (12a).

2. Dispositif d'éclairage (10) selon la revendication 1,
**caractérisé en ce que**
la source de lumière laser (16) est agencée de sorte que ladite source émet, en cours de fonctionnement, de la lumière laser (16a) en direction de la face réfléchissante (14a) du réflecteur (14) de telle manière qu'au moins une prolongation rectiligne théorique (16b) d'un faisceau lumineux de la lumière laser (16a) frappe la face réfléchissante (14a) du réflecteur (14).

3. Dispositif d'éclairage (10) selon l'une quelconque des revendications précédentes,
**caractérisé en ce que**
le réflecteur (14) est réalisé à partir d'un matériau électriquement non conducteur qui est recouvert au moins de la couche électriquement conductrice de sorte que la face extérieure (14b) du réflecteur (14) est formée à partir du matériau électriquement non conducteur.

4. Dispositif d'éclairage (10) selon l'une quelconque des revendications précédentes,
**caractérisé en ce que**
le capteur inductif (12a) comprend une bobine (12b), et le capteur inductif (12a) est conçu pour générer au moyen de la bobine (12b) un champ magnétique se modifiant dans le temps.

5. Dispositif d'éclairage (10) selon l'une quelconque des revendications précédentes,
**caractérisé en ce que**
le capteur inductif (12a) est conçu pour induire un courant d'induction dans la couche électriquement conductrice de la face réfléchissante (14a) du réflecteur (14).

6. Dispositif d'éclairage (10) selon l'une quelconque des revendications précédentes,
**caractérisé en ce que**
le dispositif de sécurité (12) est conçu pour éteindre la source de lumière laser (16) si une température et/ou une modification de température du secteur de la face réfléchissante (14a) du réflecteur (14) détectée au moyen du capteur inductif (14a) dépasse une première valeur limite prédéterminée et/ou descend en dessous d'une seconde valeur limite prédéterminée.

7. Dispositif d'éclairage (10) selon l'une quelconque des revendications précédentes,
**caractérisé en ce que**
le capteur inductif (12a), en particulier la bobine (12b) du capteur inductif (12a), est agencé mécaniquement en contact avec la face extérieure (14b) du réflecteur (14).

8. Dispositif d'éclairage (10) selon l'une quelconque des revendications précédentes,
**caractérisé en ce que**
le dispositif de sécurité (12) présente une pluralité de capteurs inductifs (12a).

9. Dispositif d'éclairage (10) selon la revendication 8,
**caractérisé en ce que**
le dispositif de sécurité (12) est conçu pour, dans le cas d'une augmentation locale de la température dans un sous-secteur de la face réfléchissante (14a) du réflecteur (14), déterminer de manière géométrique l'emplacement du sous-secteur.

10. Procédé de détection des états de défaillance d'un dispositif d'éclairage (10) destiné à un véhicule automobile au moyen d'un dispositif de sécurité (12), dans lequel le dispositif d'éclairage (10) présente une source de lumière laser (16) conçue pour émettre de la lumière (16a) et rayonner sur un élément de conversion de longueurs d'onde qui convertit la lumière rayonnée en lumière présentant d'autres longueurs d'onde, et un réflecteur (14) muni d'une face réfléchissante (14a) conçue pour réfléchir la lumière, et muni d'une face extérieure (14b) qui est agencée détournée et opposée par rapport à la face réfléchissante (14a) ; et
**caractérisé en ce que**
la face réfléchissante (14a) comprend une couche électriquement conductrice, et une modification de température d'au moins un secteur de la face réfléchissante (14a) du réflecteur (14) est détectée grâce à au moins un capteur inductif (12a) du dispositif de sécurité (12), ledit capteur étant agencé à l'extérieur par rapport au réflecteur (14), de sorte que la face extérieure (14b) du réflecteur (14) est tournée vers le capteur inductif (12a) et la face réfléchissante (14a) du réflecteur est détournée du capteur inductif (12a), et un état de défaillance est détecté en fonction de la modification de température.
